# EUROPEAN PATENT SPECIFICATION

(11) **EP 4 068 443 B1**
(45) Date of publication and mention of the grant of the patent: **10.06.2026**
(21) Application number: 20894892.7
(22) Date of filing: 19.11.2020
(51) Int. Cl.: H01M 50/152, H01M 50/578, H01M 50/342, H01M 50/107, H01M 50/167, H01M 10/0525

(54) **SEALED BATTERY**
ABGEDICHTETE BATTERIE
BATTERIE SCELLÉE

(30) Priority: 29.11.2019 JP 2019217227
(43) Date of publication of application: 05.10.2022
(73) Proprietor: Panasonic Energy Co., Ltd., Moriguchi-shi, Osaka 570-8511 (JP)
(72) Inventor: NOGAMI, Takahiro, Osaka-shi, Osaka 540-6207 (JP)
(74) Representative: Novagraaf International SA
(86) International application number: PCT/JP2020/043103
(87) International publication number: WO 2021/106729

(56) References cited:
- WO-A1-2015/146077
- WO-A1-2019/187755
- JP-A- 2009 110 808
- JP-A- 2009 110 808
- JP-A- 2009 289 741
- JP-A- 2014 197 463
- JP-A- 2014 197 463
- US-A1- 2021 005 871

## Description

### TECHNICAL FIELD

The present disclosure relates to a sealed battery.

### BACKGROUND ART

In recent years, there has been a need for a secondary battery to have a further increased capacity because applications have been expanding to a power source for electric vehicles, a power storage device for utilizing natural energy, and the like. In electric vehicle and power storage devices, a battery module is used, which is formed by connecting a number of secondary batteries in series or in parallel via an external lead. As the capacity of the secondary battery increases, higher safety is required for the secondary battery and the battery module. Traditionally, when a battery internal pressure is abnormally increased due to overcharge of the secondary battery, for example, a current path in the secondary battery is caused to be cut-off to prevent thermal runaway and rupture of the secondary battery in advance.

Patent Literature 1 describes a sealed battery in which a current shut-off mechanism is incorporated into a sealing member that seals one end of an exterior can to ensure safety. The current shut-off mechanism is configured by combining a vent member made of a metal, an insulating member, and a metal body having a ventilation hole. Respective central portions of the vent member and the metal body are connected to each other, and the insulating member is interposed between their respective outer peripheral portions. When a battery internal pressure increases, the metal body pulls a connection part with the vent member outward of the battery, and the connection part or a thin portion provided in the metal body is fractured so that a current path between the vent member and the metal body is cut-off. Further, when the battery internal pressure increases, the vent member is fractured with the thin portion of the vent member used as a starting point, whereby a gas in the battery is exhausted. In addition, Patent Literature 2 relates to a closed type battery excellent in safety provided at low cost and Patent Literature 3 relates to a battery providing a safety valve mechanism in the battery case bottom face.

### CITATION LIST

### PATENT LITERATURE

PATENT LITERATURE 1: International Publication No. WO 2016/157748
PATENT LITERATURE 2: Unexamined Japanese Patent Publication No. 2009-110808
PATENT LITERATURE 3: Unexamined Japanese Patent Publication No. 2014-197463

### SUMMARY

### TECHNICAL PROBLEM

In a configuration described in Patent Literature 1, the sealing member includes three components, i.e., the vent member, the insulating member, and the metal body to make the sealing member have a current cut-off function and a function of exhausting a gas in the battery. Since the components are required to reliably operate at the time of an abnormality in the battery, it is essential that each have a complicated and highly accurate processed shape. When the number of components constituting the sealing member is large, this places a large burden such as an increase in the number of man-hours in processing. Thus, it is desired to reduce the number of components constituting the sealing member. To make the sealing member have the current cut-off function, it is conceivable to form a small annular easy fracture part surrounding a portion, to which an external lead is connected, of the sealing member. However, in this case, when a gas is exhausted through a small hole formed by the easy fracture part being fractured over its entire circumference, the hole is more prone to being clogged with contents of the battery. Hence, there is room for improvement in terms of making the sealing member have a good current cut-off function and gas exhaust function.

It is an advantage of the present disclosure to provide a sealed battery capable of reducing the number of components constituting a sealing member by making a vent member have a good current cut-off function and gas exhaust function.

### SOLUTION TO PROBLEM

The claimed invention is defined by the appended claims. A sealed battery according to the present disclosure comprises an exterior can having a bottomed cylindrical shape, a sealing member that closes one end of the exterior can, and an electrode assembly arranged in the exterior can, in which the sealing member includes a vent member, the vent member includes an annular or C-shaped first easy fracture part and an annular second easy fracture part having an inner portion the area of which is smaller than the area of an inner portion of the first easy fracture part, and a vent pressure at which the second easy fracture part is fractured is lower than a vent pressure at which the first easy fracture part is fractured.

### ADVANTAGEOUS EFFECT OF INVENTION

The sealed battery according to present disclosure makes it possible to reduce the number of components constituting the sealing member by making the vent member have a good current cut-off function and gas exhaust function.

### BRIEF DESCRIPTION OF DRAWINGS

FIG. 1 is a sectional view of a sealed battery according to an example of an embodiment.
FIG. 2A is a perspective view in a case where a sealing member in the sealed battery illustrated in FIG. 1 is cut into two halves.
FIG. 2B is a diagram corresponding to FIG. 2A illustrating a state where a second easy fracture part is fractured over its entire circumference due to an increase in battery internal pressure so that its inner portion is separated.
FIG. 2C is a diagram corresponding to FIG. 2A illustrating a state where a portion of a first easy fracture part is fractured due to a further increase in battery inner pressure from the state illustrated in FIG. 2B.
FIG. 3 is a diagram corresponding to FIG. 2A in a sealed battery in a first comparative example.
FIG. 4 is a diagram corresponding to FIG. 2A in a sealed battery in a second comparative example.

### DESCRIPTION OF EMBODIMENTS

An embodiment of the present invention will be described in detail below with reference to the accompanying drawings. In the following description, specific shapes, materials, and directions, for example, are examples to facilitate understanding of the present disclosure, and can be appropriately changed to match uses, purposes, and specifications, for example, of a sealed battery. Although a case where the sealed battery is a non-aqueous electrolyte cylindrical secondary battery will be mainly described below, the sealed battery is not limited to this.

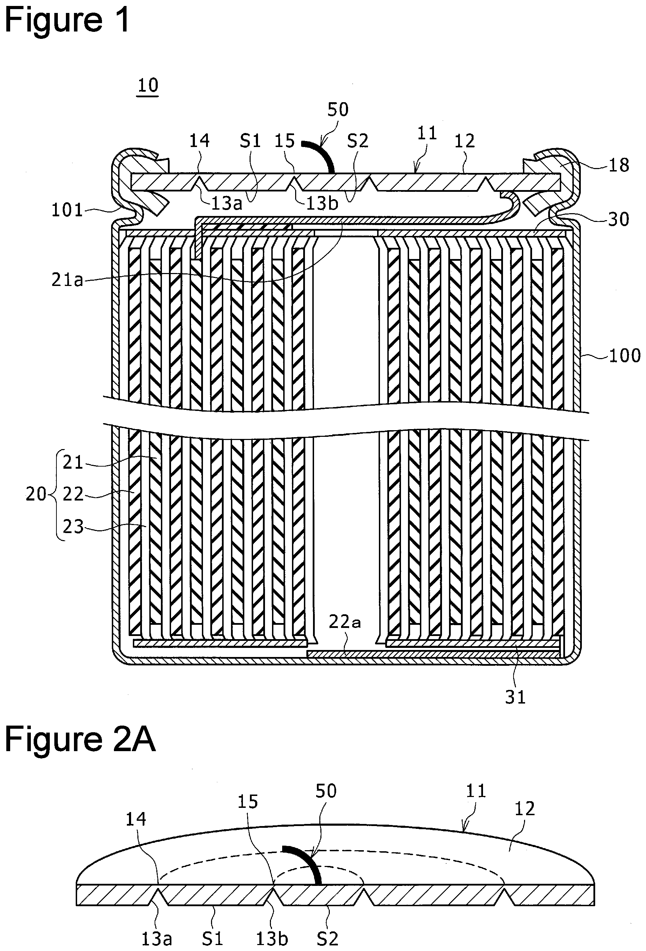

FIG. 1 is a sectional view of a sealed battery 10 according to the embodiment. FIG. 2A is a perspective view in a case where a sealing member 11 is cut into two halves. For example, a non-aqueous electrolyte secondary battery such as a lithium ion battery is used for the sealed battery 10. The sealed battery 10 is configured by housing an electrode assembly 20 and a non-aqueous electrolyte (not illustrated) in a cylindrical exterior can 100 having a bottomed cylindrical shape. The sealing member 11 is fixed to an opening at one end (an upper end in FIG. 1) of the exterior can 100 via a gasket 18 having electrical insulation. As a result, the opening at the one end of the exterior can 100 is closed by the sealing member 11 via the gasket 18. The gasket 18 is an insulating member made of resin, and seals a space between the exterior can 100 and the sealing member 11. The non-aqueous electrolyte contains a non-aqueous solvent and an electrolyte salt dissolved in the non-aqueous solvent. The non-aqueous electrolyte is not limited to a liquid electrolyte, and may be a solid electrolyte using a gel polymer or the like.

The electrode assembly 20 is of a wound type, includes a positive electrode plate 21, a negative electrode plate 22, and a separator 23, and is obtained by winding the positive electrode plate 21 and the negative electrode plate 22 in a spiral shape with the separator 23 interposed therebetween. Hereinafter, one side in a winding axis direction of the electrode assembly 20 and the other side in the winding axis direction may be respectively referred to as "upper" and "lower".

The sealing member 11 is composed of only a vent member 12 made of a metal. The vent member 12 has a function as a positive electrode terminal, a function as a current cut-off function for cutting-off a current path when a battery internal pressure increases, and a function of exhausting an internal gas when the battery internal pressure further increases. The sealing member 11 can also include other components such as a terminal cap disposed on the vent member 12. The vent member 12 is entirely formed into a disk shape, and has a first thin portion 13a on the outer side and a second thin portion 13b, each having a groove shape concentrically formed on its inner surface (its lower side surface in FIG. 1) on the inner side of the electrode assembly 20. As a result, a first easy fracture part 14 composed of the annular first thin portion 13a is formed in an outward portion in a radial direction of the vent member 12, and a second easy fracture part 15 composed of the annular second thin portion 13b is formed in an inward portion in the radial direction of the vent member 12. The second easy fracture part 15 is provided radially inside the first easy fracture part 14. In a planar view of the vent member 12, the area of an inner portion S2 of the second easy fracture part 15 is smaller than the area of an inner portion S1 of the first easy fracture part 14. The inner portion S1 is a portion including the inner portion S2. The vent member 12 can be produced by aluminum or an aluminum alloy, for example. An external lead 50 to be electrically connected to another sealed battery in a battery module (not illustrated) or an external device (not illustrated) is welded to an outer surface (an upper side surface in FIG. 1), radially inside the second easy fracture part 15, of the vent member 12. In FIG. 1, only an end portion, on the connection side of the sealing member 11, of the external lead 50 is illustrated.

An end portion of a positive electrode lead 21a to be connected to the electrode assembly 20 is welded to the inner surface (the lower side surface in FIG. 1) as a surface on the electrode assembly 20 side, radially outside the second easy fracture part 15 of the vent member 12. The positive electrode lead 21a corresponds to an electrode lead. Although a case where the end portion of the positive electrode lead 21a is welded, radially outside the first easy fracture part 14, to the inner surface of the vent member 12 is illustrated in FIG. 1, the end portion of the positive electrode lead 21a may be welded, between the second easy fracture part 15 and the first easy fracture part 14, to the inner surface of the vent member 12.

Further, the vent member 12 is configured such that a second vent pressure P2 at which the second easy fracture part 15 is fractured is lower than a first vent pressure P1 at which the first easy fracture part 14 is fractured (P2 < P1). For example, the second vent pressure P2 may be lower than the first vent pressure P1 by making the thickness of the second easy fracture part 15 smaller than the thickness of the first easy fracture part 14. Alternatively, the second vent pressure P2 may be lower than the first vent pressure P1 by making a cross-sectional shape of the second thin portion 13b different from a cross-sectional shape of the first thin portion 13a while the thickness of the second easy fracture part 15 is made smaller than the thickness of the first easy fracture part 14 or when the thickness of the second easy fracture part 15 is made the same as the thickness of the first easy fracture part 14. For example, the cross-sectional shape of the first thin portion 13a is set to a semi-circular shape or a semi-elliptical shape, and the cross-sectional shape of the second thin portion 13b is set to a V shape, thereby making it easier to fracture the second easy fracture part 15 than the first easy fracture part 14.

The gasket 18 is an annular member, and is disposed between an inner peripheral surface of the opening formed at one end (the upper end in FIG. 1) of the exterior can 100 and an outer peripheral surface of the sealing member 11 and is caulked and fixed by the end portion of the exterior can 100. In this state, an outer peripheral portion of the vent member 12 is caulked and fixed by the exterior can 100 via the gasket 18. The gasket 18 and the sealing member 11 constitute a sealing structure at one end of the sealed battery 10. A material, which enables electrical insulation to be ensured and does not affect a battery characteristic, can be used for the gasket 18. Polymer resin is preferable as a material used for the gasket 18, and examples thereof include polypropylene (PP) resin and polybutylene terephthalate (PBT) resin.

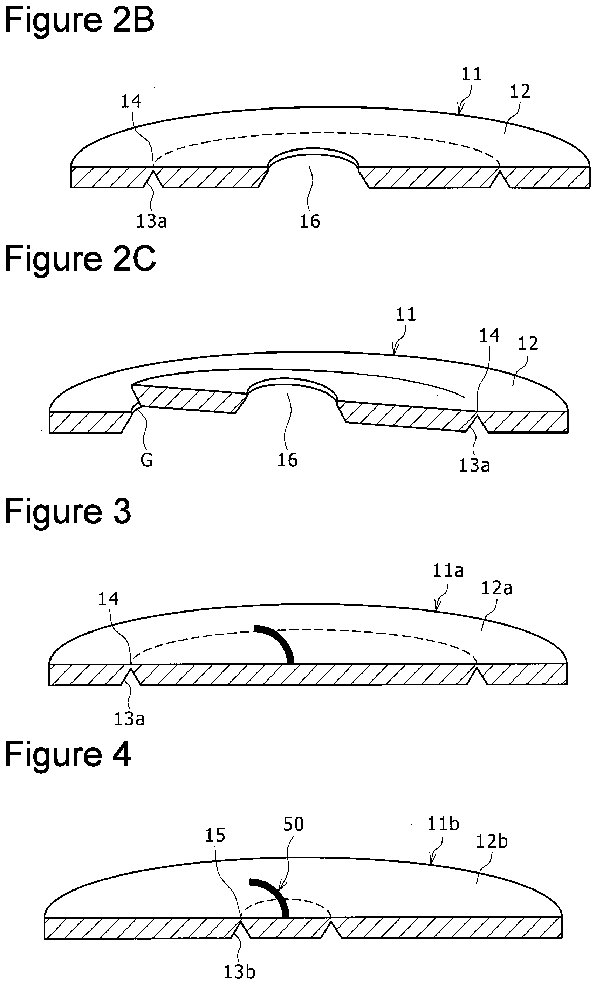

In the sealed battery 10, when the battery internal pressure increases, the second easy fracture part 15 (FIG. 1) is fractured in its entirety in its circumferential direction, and a disk portion of a central portion, to which the external lead 50 (FIG. 1) is connected, of the vent member 12 is separated, as illustrated in FIG. 2B described below, so that a current path between the external lead 50 and the positive electrode lead 21a (FIG. 1) is cut-off. In the vent member 12, the disk portion of the central portion is separated, whereby an exhaust hole 16 is formed. The sealed battery 10 is configured such that when the battery internal pressure further increases, at least a portion in a circumferential direction of the first easy fracture part 14 is fractured, as illustrated in FIG. 2C described below, whereby an internal gas is exhausted to the outside via a gap G caused by the fractured portion.

Then, the electrode assembly 20 will be described. The electrode assembly 20 is arranged in the exterior can 100. The positive electrode plate 21 constituting the electrode assembly 20 includes a positive electrode current collector and a positive electrode active material layer formed on the positive electrode current collector. For example, the positive electrode active material layer is formed on both surfaces of the positive electrode current collector. A metal foil made of aluminum or the like, or a film having a surface layer of the metal, for example, is used for the positive electrode current collector. A preferable positive electrode current collector is a metal foil made of aluminum or an aluminum alloy foil. The thickness of the positive electrode current collector is 10 µm to 30 µm, for example.

The positive electrode active material layer preferably contains a positive electrode active material, a conductive agent, and a binder. The positive electrode plate 21 is produced by applying a positive electrode mixture slurry containing a positive electrode active material, a conductive agent, a binder, and a dispersion medium such as N-methyl-2-pyrrolidon (NMP) onto both surfaces of the positive electrode current collector, followed by drying and rolling.

Examples of the positive electrode active material can include a lithium-containing transition metal composite oxide containing a transition metal element such as Co, Mn, or Ni. The lithium-containing transition metal composite oxide is not particularly limited, but may be preferably a composite oxide represented by a general formula: Li₁₊ₓMO₂ (in the formula, - 0.2 < x ≤ 0.2, where M contains at least one of Ni, Co, Mn, and Al).

Examples of the above-described conductive agent include carbon materials such as carbon black (CB), acetylene black (AB), ketjen black, and graphite. Examples of the above-described binder include fluorine-based resin such as polytetrafluoroethylene (PTFE) or polyvinylidene fluoride (PVdF), polyacrylonitrile (PAN), polyimide (PI), acrylic-based resin, and polyolefin-based resin. The resins and carboxymethyl cellulose (CMC) or its salt, polyethylene oxide (PEO), or the like may be used in combination. These may be each used alone or in a combination of two or more thereof.

The positive electrode plate 21 is provided with a positive electrode current collector exposed part (not illustrated) where a surface of a metal composing a positive electrode current collector is exposed. The positive electrode current collector exposed part is a portion to which the positive electrode lead 21a is connected and is a portion where a surface of the positive electrode current collector is not covered with a positive electrode active material layer. One end-side portion of the positive electrode lead 21a is bonded to the positive electrode current collector exposed part by ultrasonic welding, for example. The other end-side portion of the positive electrode lead 21a is guided upward through an opening formed in a disk-shaped first insulating plate 30 disposed on the upper side of the electrode assembly 20 and is connected to the inner surface on the electrode assembly 20 side of the vent member 12. Examples of a material for the positive electrode lead 21a include aluminum, an aluminum alloy, nickel, a nickel alloy, iron, and stainless steel.

The negative electrode plate 22 includes a negative electrode current collector and a negative electrode active material layer formed on the negative electrode current collector. For example, a negative electrode active material layer is formed on both surfaces of the negative electrode current collector. Further, the negative electrode plate 22 has a negative electrode current collector exposed part (not illustrated) provided in its winding-end-side end portion. The negative electrode current collector exposed part is a portion to which a negative electrode lead 22a is connected and is a portion where a surface of the negative electrode current collector is not covered with the negative electrode active material layer. One end-side portion of the negative electrode lead 22a is bonded to the negative electrode current collector exposed part by ultrasonic welding, for example. The other end-side portion of the negative electrode lead 22a is connected to a bottom portion of the exterior can 100 through the outer peripheral side of a disk-shaped second insulating plate 31 disposed on the lower side of the electrode assembly 20.

The negative electrode active material layer preferably contains a negative electrode active material and a binder. The negative electrode plate 22 is produced by applying a negative electrode mixture slurry containing a negative electrode active material, a binder, and water, for example, on both surfaces of the negative electrode current collector, followed by drying and rolling.

The negative electrode active material is not particularly limited as long as it can reversibly occlude and release lithium ions, and examples of the negative electrode active material to be used can include a carbon material such as natural graphite or artificial graphite, a metal to be alloyed with lithium, such as Si or Sn, an alloy containing these, and a composite oxide. As the binder contained in the negative electrode active material layer, resin similar to that in the positive electrode plate 21, for example, is used. If the negative electrode mixture slurry is prepared with an aqueous solvent, styrene-butadiene rubber (SBR), CMC or its salt, a polyacrylic acid or its salt, polyvinyl alcohol, and the like can be used. These may be each used alone or in a combination of two or more thereof.

The negative electrode plate 22 is used by being wound with it being laminated on the positive electrode plate 21 via the separator 23. With the use of the negative electrode lead 22a or the negative electrode lead 22a being omitted, the negative electrode plate 22 may be electrically connected to the exterior can 100 by arranging a negative electrode current collector exposed part over the entire circumference of an outermost peripheral surface of the winding-end-side end portion of the negative electrode plate 22 and bringing the negative electrode current collector exposed part into contact with an inner peripheral surface of a cylindrical portion of the exterior can 100. This makes it possible to ensure more preferable current collectability. At this time, the negative electrode lead 22a may be bonded to a negative electrode current collector exposed part formed in a winding-start-side end portion of the negative electrode plate 22.

A porous sheet having ion permeability and electrical insulation is used for the separator 23. Specific examples of the porous sheet can include a microporous thin film, a woven fabric, and a non-woven fabric. As a material for the separator 23, polyolefin-based resin such as polyethylene or polypropylene is preferable. The thickness of the separator 23 is 10 µm to 50 µm, for example. The separator 23 tends to be thinner as the battery increases in capacity and output power. The separator 23 has a melting point of approximately 130°C to 180°C, for example.

The sealed battery 10 is assembled in the following manner, for example. For example, the electrode assembly 20, together with the disk-shaped second insulating plate 31 on the lower side thereof, is inserted into the inside of the exterior can 100 having a bottomed cylindrical shape produced by drawing a steel plate, and the negative electrode lead 22a connected to the negative electrode plate 22 is connected to the bottom portion of the exterior can 100 by welding. Then, the disk-shaped first insulating plate 30 is inserted into the upper side of the electrode assembly 20 inside the exterior can 100, and a groove portion 101 (FIG. 1) having a U shape in cross section is formed by plastic working over its entire circumference in its circumferential direction on the side of the opening above the first insulating plate 30 in the exterior can 100. Then, a predetermined amount of prepared non-aqueous electrolyte is injected into the exterior can 100 housing the electrode assembly 20. The positive electrode lead 21a connected to the positive electrode plate 21 is connected to an inner side surface of the sealing member 11 by welding. The vent member 12 is housed via the gasket 18 on the groove portion 101 inside the exterior can 100 while the positive electrode lead 21a is folded with the gasket 18 inserted into and disposed in the upper side of the groove portion 101 inside an opening end portion of the exterior can 100, and the opening end portion of the exterior can 100 is caulked, thereby producing the sealed battery 10.

The above-described sealed battery 10 exhibits a current cut-off function and a gas exhaust function in the following manner. FIG. 2B is a diagram corresponding to FIG. 2A and illustrating a state where the second easy fracture part 15 is fractured over its entire circumference due to an increase in battery internal pressure so that the inner portion is separated. FIG. 2C is a diagram corresponding to FIG. 2A and illustrating a state where a part of the first easy fracture part 14 is fractured due to a further increase in battery inner pressure from the state illustrated in FIG. 2B.

Specifically, when the battery internal pressure increases, the second easy fracture part 15 (FIG. 2A) is first fractured in its entirety in the circumferential direction, and the inner portion of the second easy fracture part 15 to which the external lead 50 (FIG. 1 and FIG. 2A) is connected is completely separated from the vent member 12, as illustrated in FIG. 2B. As a result, a current path between the inner portion of the second easy fracture part 15 and the positive electrode lead 21a (FIG. 1) is cut-off. An exhaust hole 16 is formed in the central portion of the vent member 12. If the speed of an exhaust from the exhaust hole 16 is insufficient, when the battery internal pressure further increases, at least a part in the circumferential direction of the first easy fracture part 14 is fractured, and the inner portion of the first easy fracture part 14 is deformed to the outside of the battery, as illustrated in FIG. 2C. As a result, a gas in the battery is exhausted through the gap G. At this time, the second easy fracture part 15 is formed in an annular shape because it is necessary to cause the second easy fracture part 15 to be fractured entirely in the circumferential direction to cut-off the current path as described above. However, when the first easy fracture part 14 is to be fractured, it is sufficient that only a part of the first easy fracture part 14 in the circumferential direction is fractured. Hence, the first easy fracture part 14 is not limited to that to be formed in an annular shape in the vent member 12, but may be formed in a C shape by a thin portion or the like in the vent member 12. The first easy fracture part may be formed by forming a stepped portion the thickness of which changes in the radial direction of the vent member 12.

The above-described sealed battery 10 makes it possible to make the vent member 12 have a good current cut-off function and gas exhaust function, thereby making it possible to reduce the number of components constituting the sealing member 11. As a result, the number of components requiring a processing accuracy can be reduced, thereby leading to a reduction in manufacturing cost.

FIG. 3 is a diagram corresponding to FIG. 2A and illustrating a sealed battery in a first comparative example. In a vent member 12a constituting a sealing member 11a in the sealed battery in the first comparative example, a second easy fracture part 15 (FIG. 2A) is not formed, and only a first easy fracture part 14 is formed in an outward portion in a radial direction of the vent member 12a, unlike in the vent member 12 illustrated in FIG. 2A. In the first comparative example like this, if the first easy fracture part 14 can be fractured over its entire circumference with an increase in battery internal pressure, a current path between a portion radially outside the first easy fracture part 14 to which the positive electrode lead 21a (FIG. 1) is connected and a portion radially inside the first easy fracture part 14 in the vent member 12a can be cut-off. However, in the first comparative example, the circumferential length of the first easy fracture part 14 is longer than the circumferential length of the second easy fracture part 15 in the embodiment illustrated in FIG. 1 to FIG. 2C. In the first comparative example, this makes it difficult to stably fracture the first easy fracture part 14 over the entire circumference to cut-off the current path with an initial pressure at which the battery internal pressure has increased. Therefore, in the sealed battery in the first comparative example, it is difficult to make the vent member 12a have a good current cut-off function.

FIG. 4 is a diagram corresponding to FIG. 2A and illustrating a sealed battery in a second comparative example. In a vent member 12b constituting a sealing member 11b in the sealed battery in the second comparative example, a first easy fracture part 14 (FIG. 2A) is not formed, and only a second easy fracture part 15 is formed in an inward portion in a radial direction of the vent member 12b, unlike in the vent member 12 illustrated in FIG. 2A. In the second comparative example like this, the circumferential length of the second easy fracture part 15 is shorter than the circumferential length of the first easy fracture part 14 in the first comparative example illustrated in FIG. 3. In fact, this makes it easy to stably fracture the second easy fracture part 15 over the entire circumference to cut-off a current path with an initial pressure at which a battery internal pressure has increased. However, it tends to reduce the diameter of an exhaust hole of a vent member formed after an inward portion of the second easy fracture part 15 is separated. As a result, the exhaust hole is more prone to be clogged with contents of the battery, decreasing the exhaust performance and abnormally increasing the battery internal pressure. This may causes damage to a portion, such as a side surface of the battery, where it is desirable to be kept undamaged. Therefore, in the sealed battery in the second comparative example, it is difficult to make the vent member 12b have a good gas exhaust function.

According to the embodiment illustrated in FIG. 1 to FIG. 2C, when the second easy fracture part 15 having a small circumferential length is fractured over the entire circumference to separate the inner portion in the early stages of an increase in battery internal pressure due to occurrence of an abnormality in the battery, for example, the current path can be cut-off. When the battery internal pressure further increases, the first easy fracture part 14 larger than the second easy fracture part 15 is fractured, thereby making it possible to enhance an exhaust performance. As a result, in the present embodiment, problems occurring in the first comparative example and the second comparative example can be solved.

Although a case where the sealed battery 10 is set as a cylindrical secondary battery has been described in the embodiment illustrated in FIG. 1 to FIG. 2C, the sealed battery according to the present disclosure is not limited to this, and instead may be a rectangular secondary battery whose exterior can has a rectangular parallelepiped shape, for example. The sealed battery according to the present disclosure is not limited to that in which the first easy fracture part and the second easy fracture part are concentrically formed in the sealing member, and instead a first easy fracture part and a second easy fracture part having different centers may be respectively formed at different positions of the sealing member. In this case, the area of an inward portion of the second easy fracture part is made smaller than the area of an inward portion of the first easy fracture part. Further, a vent member is configured such that a vent pressure at which the second easy fracture part is fractured is lower than a vent pressure at which the first easy fracture part is fractured. In this case, too, the number of components in the sealing member can be reduced in a configuration in which the vent member is made to have a good current cut-off function and gas exhaust function, like in the configuration illustrated in FIG. 1 to FIG. 2C.

### REFERENCE SIGNS LIST

10 sealed battery, 11, 11a, 11b sealing member, 12, 12a, 12b vent member, 13a first thin portion, 13b second thin portion, 14 first easy fracture part, 15 second easy fracture part, 16 exhaust hole, 18 gasket, 20 electrode assembly, 21 positive electrode plate, 21a positive electrode lead, 22 negative electrode plate, 22a negative electrode lead, 23 separator, 30 first insulating plate, 31 second insulating plate, 50 external lead, 100 exterior can, and 101 groove portion.

## Claims

1. A sealed battery (10) comprising:
an exterior can (100) having a bottomed cylindrical shape;
a sealing member (11) that closes one end of the exterior can (100); and
an electrode assembly (20) arranged in the exterior can (100), wherein
the sealing member (11) includes a vent member (12),
the vent member (12) includes an annular or C-shaped first easy fracture part (14) and an annular second easy fracture part (15) having an inner portion the area of which is smaller than the area of an inner portion of the first easy fracture part (14),
the vent member (12) is configured so that a vent pressure at which the second easy fracture part (15) is fractured is lower than a vent pressure at which the first easy fracture part (14) is fractured, in a state before the second easy fracture part (15) is fractured,
the second easy fracture part (15) is provided radially inside the first easy fracture part (14), and **characterized in that**
an external lead (50) to be connected to another battery or an external device is welded to an outer surface, radially inside the second easy fracture part (15), of the vent member (12), and an electrode lead (21a) to be connected to the electrode assembly (20) is welded to a surface on the electrode assembly (20) side, radially outside the second easy fracture part (15), of the vent member (12).

2. The sealed battery (10) according to claim 1, wherein
the electrode lead (21a) is welded to a surface on the electrode assembly (20) side, radially outside the first easy fracture part (14), of the vent member (12).

## Patentansprüche

1. Verschlossene Batterie (10), umfassend:
eine Außendose (100) mit einer zylindrischen Form mit Boden;
ein Dichtungselement (11), das ein Ende der Außendose (100) verschließt; und
eine Elektrodenanordnung (20), die in der Außendose (100) angeordnet ist, wobei
das Dichtungselement (11) ein Entlüftungselement (12) umfasst,
das Entlüftungselement (12) einen ringförmigen oder C-förmigen ersten Sollbruchbereich (14) und einen ringförmigen zweiten Sollbruchbereich (15) umfasst, der einen inneren Abschnitt aufweist, dessen Fläche kleiner ist als die Fläche eines inneren Abschnitts des ersten Sollbruchbereichs (14),
das Entlüftungselement (12) so konfiguriert ist, dass ein Entlüftungsdruck, bei dem der zweite Sollbruchbereich (15) bricht, niedriger ist als ein Entlüftungsdruck, bei dem der erste Sollbruchbereich (14) bricht, in einem Zustand bevor der zweite Sollbruchbereich (15) gebrochen ist,
der zweite Sollbruchbereich (15) radial innerhalb des ersten Sollbruchbereichs (14) vorgesehen ist, und **dadurch gekennzeichnet, dass**
eine externe Leitung (50), die mit einer anderen Batterie oder einem externen Gerät verbunden werden soll, an eine äußere Oberfläche, radial innerhalb des zweiten Sollbruchbereichs (15), des Entlüftungselements (12) geschweißt ist, und eine Elektrodenleitung (21a), die mit der Elektrodenanordnung (20) verbunden werden soll, an eine Oberfläche auf der Seite der Elektrodenanordnung (20), radial außerhalb des zweiten Sollbruchbereichs (15), des Entlüftungselements (12) geschweißt ist.

2. Verschlossene Batterie (10) nach Anspruch 1, wobei
die Elektrodenleitung (21a) an eine Oberfläche auf der Seite der Elektrodenanordnung (20), radial außerhalb des ersten Sollbruchbereichs (14), des Entlüftungselements (12) geschweißt ist.

## Revendications

1. Batterie étanche (10) comprenant :
un boîtier extérieur (100) ayant une forme cylindrique à fond ;
un élément d'étanchéité (11) qui ferme une extrémité du boîtier extérieur (100) ; et
un ensemble d'électrodes (20) disposé dans le boîtier extérieur (100), dans laquelle l'élément d'étanchéité (11) comprend un élément d'évent (12),
l'élément d'évent (12) comprend une première partie de rupture facile (14) annulaire ou en forme de C et une seconde partie de rupture facile (15) annulaire ayant une portion intérieure dont la surface est inférieure à la surface d'une portion intérieure de la première partie de rupture facile (14),
l'élément d'évent (12) est configuré de sorte qu'une pression d'évent à laquelle la seconde partie de rupture facile (15) est rompue est inférieure à une pression d'évent à laquelle la première partie de rupture facile (14) est rompue, dans un état avant que la seconde partie de rupture facile (15) ne soit rompue,
la seconde partie de rupture facile (15) est prévue radialement à l'intérieur de la première partie de rupture facile (14), et **caractérisée en ce que**
un conducteur externe (50) destiné à être connecté à une autre batterie ou à un dispositif externe est soudé à une surface extérieure, radialement à l'intérieur de la seconde partie de rupture facile (15), de l'élément d'évent (12), et un conducteur d'électrode (21a) destiné à être connecté à l'ensemble d'électrodes (20) est soudé à une surface du côté de l'ensemble d'électrodes (20), radialement à l'extérieur de la seconde partie de rupture facile (15), de l'élément d'évent (12).

2. Batterie étanche (10) selon la revendication 1, dans laquelle
le conducteur d'électrode (21a) est soudé à une surface du côté de l'ensemble d'électrodes (20), radialement à l'extérieur de la première partie de rupture facile (14), de l'élément d'évent (12).
